# EUROPÄISCHE PATENTANMELDUNG

(11) **EP 3 272 564 A1**
(43) Veröffentlichungstag der Anmeldung: **24.01.2018**
(21) Anmeldenummer: 17020282.4
(22) Anmeldetag: 06.07.2017
(51) Int. Cl.: B60J 1/20, E06B 9/52

(54) **INSEKTENSCHUTZ FÜR EINE FAHRZEUGÖFFNUNG**

(30) Priorität: 19.07.2016 DE 202016004396 U
(71) Anmelder: Kresenz, Mayr, 86551 Aichach (DE)
(72) Erfinder: Mayr, Beno, 86551 Aichach (DE)
(74) Vertreter: Munk, Ludwig

(57) **Zusammenfassung**

Bei einer Insektenschutzvorrichtung für eine durch ein zugeordnetes Verschlussorgan (8) verschließbare, durch einen in der Fahrzeugkarosserie (1) ausgebildeten, umlaufenden Falz (3), in dem eine umlaufende Dichtung (4) angeordnet ist, begrenzte Fahrzeugöffnung (2) mit einem die Fahrzeugöffnung (2) ausfachenden, mit seinem Rand fahrzeugseitig festlegbaren Moskitonetz (5) lassen sich dadurch eine hohe Bedienungsfreundlichkeit und Zuverlässigkeit erreichen, dass das Moskitonetz (5) eine der von der umlaufenden Dichtung (4) eingeschlossenen Fläche zuzüglich eines allseitig darüber hinausgehenden Rands entsprechende Kontur und Größe aufweist und dass das Moskitonetz (5) die umlaufende Dichtung (4) von außen überspannend mit seinem Rand in den Falz (3) eingreift und hierin festlegbar ist, wobei der Rand des Moskitonetzes (5) zumindest bereichsweise mit Magneten (6) bestückt ist.

## Beschreibung

Die Erfindung betrifft einen Insektenschutz für eine durch ein zugeordnetes Verschlussorgan verschließbare, durch einen in der Fahrzeugkarosserie ausgebildeten, umlaufenden Falz, in dem eine umlaufende Dichtung angeordnet ist, begrenzte Fahrzeugöffnung mit einem die Fahrzeugöffnung ausfachenden, mit seinem Rand fahrzeugseitig festlegbaren Moskitonetz.

Bei den bekannten Anordnungen dieser Art sind im Fahrzeuginnenraum Klettbandstreifen angebracht, an denen das Moskitonetz mit randseitig angebrachten Klettbandstreifen festlegbar ist. Diese Klettbandhalterung erweist sich als sehr umständlich. Zur Schaffung einer Ein- bzw. Ausstiegsluke muss die Klettbandhalterung zumindest teilweise gelöst worden, in dem die in Frage kommenden Klettbandstreifen voneinander abgerissen werden, und dann wieder in gegenseitigen Hafteingriff gebracht werden, was wiederum eine gezielte Bedienung erfordert. Dies erweist sich erfahrungsgemäß als sehr umständlich und birgt auch die Gefahr von Undichtheiten. Die bekannten Anordnungen sind daher nicht zuverlässig und bedienungsfreundlich genug.

Hiervon ausgehend ist es daher die Aufgabe der vorliegenden Erfindung, eine Anordnung eingangs erwähnter Art mit einfachen und kostengünstigen Mitteln so zu verbessern, dass eine hohe Bedienungsfreundlichkeit und Zuverlässigkeit erreicht werden.

Diese Aufgabe wird erfindungsgemäß dadurch gelöst, dass das Moskitonetz eine der von der umlaufenden Dichtung eingeschlossenen Fläche zuzüglich eines allseitig darüber hinausgehenden Rands entsprechende Kontur und Größe aufweist und dass das Moskitonetz die Dichtung von außen überspannend mit seinem Rand in den Falz eingreift und hierin festlegbar ist, wobei der Rand des Moskitonetzes zumindest bereichsweise mit Magneten bestückt ist.

Die Fahrzeugkarosserie besteht in der Regel aus Stahlblech. Die Magnete werden daher automatisch an das Stahlblech angezogen, so dass sich in vorteilhafter Weise eine selbsthaftende Anordnung ergibt. Magnete, die zur Schaffung einer Ein- bzw. Ausstiegsluke außer Eingriff mit der Fahrzeugkarosserie gebracht werden, kommen beim Loslassen automatisch in die ursprüngliche Position zurück, wo ein magnetischer Schluss erfolgt, so dass automatisch ein zuverlässiger Halt des Moskitonetzes bewerkstelligt wird, ohne dass hier zusätzlich nachgeholfen werden muss. Da ein Moskitonetz in der Regel sehr feinmaschig ist, ergeben sich im an der Dichtung anliegenden Bereich mehrere dichtungsparallele Schüsse, so dass von außen anstehende Feuchtigkeit durch mehrere Barrieren aufgehalten wird. Eine Beeinträchtigung der Dichtung ist daher in vorteilhafter Weise nicht zu befürchten. Mit den erfindungsgemäßen Maßnahmen werden ersichtlich die Nachteile der bekannten Anordnungen zuverlässig vermieden und die oben genannte Aufgabe auf höchst einfache und kostengünstige Weise gelöst.

Vorteilhafte Ausgestaltungen und zweckmäßige Fortbildungen der übergeordneten Maßnahmen sind in den Unteransprüchen angegeben.

Bei gattungsgemäßen Anordnungen oben erwähnter Art besitzt das Moskitonetz vielfach wenigstens zwei entlang einer vertikalen, durch ein vorzugsweise als Reißverschluss ausgebildetes Verschlussorgan überbrückbaren Fuge lösbar miteinander verbindbare Flügelelemente, was die Schaffung einer Ein- bzw. Ausstiegsluke erleichtert. Bei einer derartigen Anordnung ist es zweckmäßig, wenn zumindest der untere Randbereich der Flügelelemente mit Magneten bestückt ist, die beim Schließen des Reißverschlusses automatisch an die richtige Stelle zurückkommen und magnetisch haften, wodurch automatisch ein zuverlässiger Verschluss erreicht wird, ohne dass Bedienungsschritte notwendig sind oder sonstwie nachgeholfen werden muss.

Eine besonders einfache und zweckmäßige Ausführung kann darin bestehen, dass der in den Falz eingreifende Rand des Moskitonetzes mit über seinen ganzen Umfang verteilten Magneten bestückt ist. Dies erleichtert in vorteilhafter Weise die Anbringung und Abnahme des Moskitonetzes.

Die Magnete können zweckmäßig streifenförmig ausgebildet und voneinander beabstandet sein. Dies ermöglicht auch bei einem kurvenförmigen Randverlauf eine zuverlässige Magnethaftung.

Eine weitere vorteilhafte Maßnahme kann darin bestehen, dass die Magnete in einem am Rand des Moskitonetzes vorgesehenen Saum aufgenommen sind. Da ein Saum in der Regel ohnehin benötigt wird, ergibt sich hierbei eine besonders einfache Ausführung. Gleichzeitig ergibt sich hierbei eine geschützte Unterbringung der Magnete, wodurch hiervon verursachten Lackbeschädigungen etc. vorgebeugt ist.

Eine andere zweckmäßige Maßnahme kann darin bestehen, dass den Magneten vom Rand des Moskitonetzes abstehende Laschen zugeordnet sind, die als Aufnahmetaschen ausgebildet sein können. Auch hierbei ergibt sich der Vorteil der geschützten Anordnung der Magnete. Ein weiterer Vorteil ist darin zu sehen, dass mit Hilfe der Laschen ein vergleichsweise großer Abstand zwischen der Dichtung und der Platzierung der Magnete überbrückt werden kann, ohne dass ein entsprechend großer Randbereich des Moskitonetzes benötigt wird. Es ergibt sich daher ein sparsamer Materialeinsatz.

Zur Erzielung einer gewissen Randversteifung kann das Moskitonetz am äußeren Umfang mit einem elastischen Einfassband versehen sein. Dies erleichtert die Handhabung des Moskitonetzes bei der Anbringung bzw. Abnahme und gewährleistet einen zuverlässigen Falzeingriff.

Eine weitere Fortbildung kann darin bestehen, dass am oberen Rand des Moskitonetzes Bänder zur Bildung von Halteschlaufen für das Moskitonetz im teilweise aufgerollten Zustand vorgesehen sind. Hierdurch wird erreicht, dass das Moskitonetz nicht vollständig abgenommen werden muss, sofern es nicht benötigt wird, sondern einfach hochgerollt und an den Halteschlaufen aufgehängt werden kann. Hierdurch wird die Bedienungsfreundlichkeit weiter verbessert.

Eine weitere zweckmäßige Maßnahme kann darin bestehen, dass am unteren Rand des Moskitonetzes wenigstens eine vorzugsweise von innen und außen bedienbare Schlaufe angebracht ist. Diese dient in vorteilhafter Weise als Handhabe, um die zumindest im Bereich des unteren Rands des Moskitonetzes vorgesehene Magnethalterung schnell und einfach außer Eingriff bringen zu können.

Weitere vorteilhafte Ausgestaltungen und zweckmäßige Fortbildungen der übergeordneten Maßnahmen ergeben sich aus der nachstehenden Beschreibung eines Ausführungsbeispiels anhand der Zeichnung.

In der nachstehend beschriebenen Zeichnung zeigen:
- Figur 1: eine schematische Darstellung einer Fahrzeugöffnung mit zugeordnetem Moskitonetz,
- Figur 2: die Anordnung gemäß Fig. 1 mit geschlossener Türe und
- Figur 3: eine Ansicht des Moskitonetzes in aufgespanntem Zustand.

Hauptanwendungsgebiet der vorliegenden Erfindung sind Personenwagen jeder Art. Derartige Fahrzeuge sind in der Regel mit mehreren, durch jeweils eine zugeordnete Tür verschließbaren Öffnungen versehen.

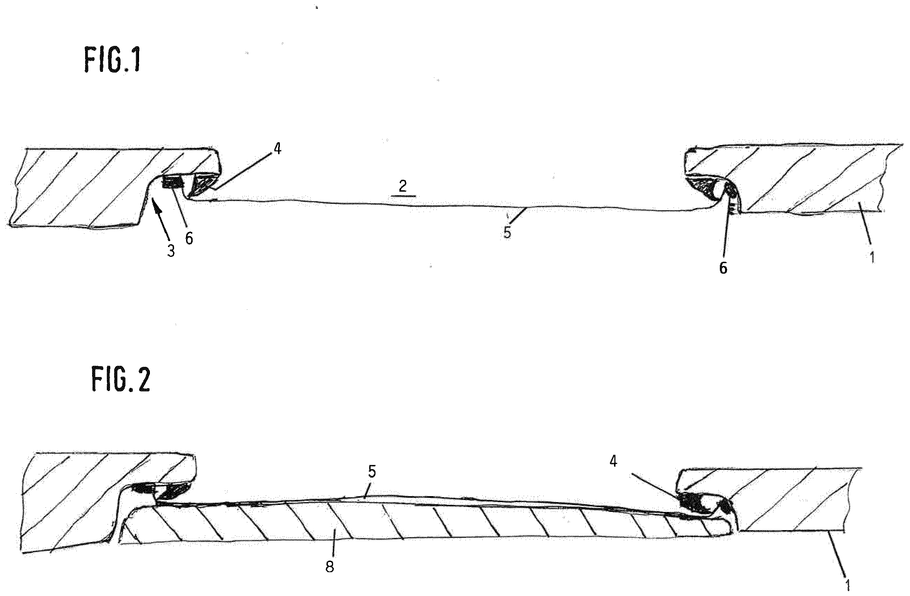

Der der Fig. 1 zugrunde liegende Abschnitt der Karosserie 1 eines derartigen Fahrzeugs enthält eine Öffnung 2, die mittels einer nicht dargestellten Tür verschließbar ist. Die Öffnung 2 ist durch einen in der Karosserie 1 ausgebildeten, umlaufenden Falz 3 begrenzt. In diesem ist eine umlaufende Dichtung 4 angeordnet, die einfach als Lippendichtung ausgebildet sein kann. Um zu verhindern, dass bei geöffneter Türe Insekten in den Innenraum des Fahrzeugs eindringen können, ist ein Moskitonetz 5 vorgesehen, das mit seinem Rand an der Fahrzeugkarosserie 1 festlegbar ist und die Öffnung 2 insektendicht verschließt.

Das Moskitonetz 5 liegt zweckmäßig unter leichter Spannung von außen an der umlaufenden Dichtung 4 an und greift mit seinem über die umlaufende Dichtung 4 hinausragenden Rand in den Falz 3 ein, wo es an der Karosserie 1 befestigt ist. Im dargestellten Beispiel ist das Moskitonetz hierzu mit über seinen ganzen umlaufenden Rand verteilten Magneten 6 versehen die an die aus Stahlblech bestehende Karosserie 1 angezogen und dort durch magnetischen Fluss gehalten werden. Die über den umlaufenden Rand des Moskitonetztes 5 verteilten Magnete 6 können zweckmäßig streifenförmig ausgebildet und voneinander beabstandet sein. Ein Streifengröße von 40 x 10,5 mm hat sich als besonders günstig erwiesen.

Das die umlaufende Dichtung 4 von außen überspannende Moskitonetz 5 wird gemäß Fig. 2 bei geschlossener Türe 8 durch diese an die Dichtung 4 angedrückt, wodurch die Dichtwirkung nicht beeinträchtigt, sondern noch verbessert wird, da das Moskitonetz 5 eine engmaschige Struktur aufweist und dementsprechend mit mehreren, dichtungsparallelen Schüssen an der Dichtung 4 zur Anlage kommt.

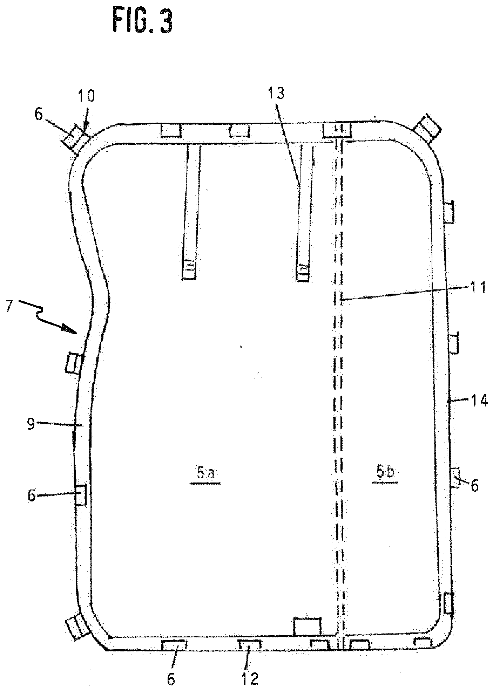

Dem mit seinem Randbereich in den Falz 3 eingreifenden Moskitonetz 5 liegt ein in Figur 3 angedeuteter Zuschnitt mit einer der von der umlaufenden Dichtung 4 eingeschlossenen Fläche zuzüglich eines allseitig darüber hinausgehenden, in den Falz 3 eingreifenden Rands entsprechender Größe zugrunde. Der dem Moskitonetz 5 zugrunde liegende Zuschnitt 7 hat dementsprechend eine der Kontur der von der umlaufenden Dichtung 4 eingeschlossenen Fläche ähnliche, um die Breite des in den Falz 3 eingreifenden Randbereichs vergrößerte Fläche- und Randkontur.

Die streifenförmigen Magnete 6 können einfach auf den zugeordneten Randbereich des Moskitonetzes 5 aufgeklebt bzw. aufgeheftet werden. Im dargestellten Beispiel ist das Moskitonetz 5, wie Fig. 3 weiter zeigt, randseitig mit einem Saum 9 versehen, in den alle oder zumindest ein Teil der Magnete 6 eingesetzt sein können. Zweckmäßig sind jedenfalls die dem unteren Rand zugeordneten Magnete 6 im Saum 9 aufgenommen. Der Saum bildet praktisch einen Kanal zur Aufnahme der Magnete 6. Bei dem der Fig. 3 zugrunde liegenden Beispiel sind zusätzlich von hier mit einem Saum 9 versehenen Rand des Moskitonetzes 5 nach radial außen abgehende Laschen 10 versehen, die als Tasche ausgebildet sein können, in der jeweils ein Magnet 6 aufgenommen werden kann. Die Laschen 10 können zweckmäßig insbesondere den gebogen bzw. geschwungen verlaufenden Randbereichen zugeordnet sein.

Auch ohne Laschen direkt vom Rand abstehende Magnete 6 wären denkbar, wie in Fig. 3 rechts angedeutet ist. Derartige Magnete 6 können auch an einem am äußeren Rand des Moskitonetzes 5 vorgesehenen, vorzugsweise elastischen Einfassbands 14 angebracht sein. Die Magnete 6 können in Form und Stärke gleich oder verschieden sein. Die Anpassung erfolgt nach den praktischen Bedürfnissen so, dass ein zuverlässiger Halt des Moskitonetzes gewährleistet ist. Das gilt auch für die Verteilung auf den Umfang des Moskitonetzes.

Zur Erleichterung des Ein- bzw. Ausstiegs bei angebrachtem Moskitonetz 5 ist dieses, wie Fig. 3 weiter zeigt, in mehrere, hier zwei entlang einer vertikalen Fuge miteinander verbindbare Flügel 5a, 5b unterteilt. Zur Verbindung der Flügel 5a, 5b ist ein die genannte Fuge überbrückendes Überbrückungselement 11 vorgesehen. Dabei kann es sich zweckmäßig um einen in Fig. 3 durch eine gestrichelte Doppellinie angedeuteten Reißverschluss handeln. Am unteren Rand eines Flügels, zweckmäßig des größeren Flügels 5a ist im dargestellten Beispiel eine zweckmäßig von innen und außen bedienbare Schlaufe 12 vorgesehen, die als Reißorgan dient und bei geöffnetem Reißverschluss eine schnelle Lösung der weiteren, durch die Magnete 6 bewerkstelligten Haftverbindung ermöglicht. Sofern das Moskitonetz 5 nicht benötigt wird, aber auch nicht vollständig abgenommen werden soll, kann dieses einfach vom unteren Rand her aufgerollt und durch in seinem oberen Bereich vorgesehene Halteschlaufen gehalten werden. Zur Bildung der Halteschlaufen können in Fig. 3 angedeutete, vom oberen Rand des Moskitonetzes 5 abgehende Bänder 13 vorgesehen sein.

## Patentansprüche

1. Insektenschutz für eine durch ein zugeordnetes Verschlussorgan (8) verschließbare, durch einen in der Fahrzeugkarosserie (1) ausgebildeten, umlaufenden Falz (3), in dem eine umlaufende Dichtung (4) angeordnet ist, begrenzte Fahrzeugöffnung (2) mit einem die Fahrzeugöffnung (2) ausfachenden, mit seinem Rand fahrzeugseitig festlegbaren Moskitonetz (5), **dadurch gekennzeichnet, dass** das Moskitonetz (5) eine der von der umlaufenden Dichtung (4) eingeschlossenen Fläche zuzüglich eines allseitig darüber hinausgehenden Rands entsprechende Kontur und Größe aufweist und dass das Moskitonetz (5) die umlaufende Dichtung (4) von außen überspannend mit seinem Rand in den Falz (3) eingreift und hierin festlegbar ist, wobei der Rand des Moskitonetzes (5) zumindest bereichsweise mit Magneten (6) bestückt ist.

2. Insektenschutz nach Anspruch 1, **dadurch gekennzeichnet, dass** das Moskitonetz (5) wenigstens zwei entlang einer vertikalen, durch ein vorzugsweise als Reißverschluss ausgebildetes Verschlussorgan (11) überbrückbaren Fuge lösbar miteinander verbindbare Flügelelemente (5a, 5b) aufweist und dass zumindest der untere Rand der Flügelelemente (5a, 5b) mit Magneten (6) bestückt ist.

3. Insektenschutz nach einem der vorhergehenden Ansprüche, **dadurch gekennzeichnet, dass** der in den Falz (3) eingreifende Rand des Moskitonetztes (5) mit über seinen ganzen Umfang verteilten Magneten (6) versehen ist.

4. Insektenschutz nach einem der vorhergehenden Ansprüche, **dadurch gekennzeichnet dass** die Magnete (6) streifenförmig ausgebildet sind.

5. Insektenschutz nach einem der vorhergehenden Ansprüche, **dadurch gekennzeichnet, dass** die Magnete (6) voneinander beabstandet sind.

6. Insektenschutz nach einem der vorhergehenden Ansprüche, **dadurch gekennzeichnet, dass** die Magnete (6) zumindest teilweise in einem am Rand des Moskitonetzes (5) vorgesehenen Saum (9) aufgenommen sind.

7. Insektenschutz nach einem der vorhergehenden Ansprüche, **dadurch gekennzeichnet, dass** die Magnete (6) zumindest teilweise auf vom Rand des Moskitonetzes (5) abstehenden Laschen (10) aufgenommen sind.

8. Insektenschutz nach einem der vorhergehenden Ansprüche, **dadurch gekennzeichnet, dass** das Moskitonetz (5) am äußeren Umfang mit einem elastischen Einfassband (14) versehen ist.

9. Insektenschutz nach einem der vorhergehenden Ansprüche, **dadurch gekennzeichnet, dass** am oberen Rand des Moskitonetzes (5) Bänder (13) zur Bildung von Halteschlaufen vorgesehen sind.

10. Insektenschutz nach einem der vorhergehenden Ansprüche, **dadurch gekennzeichnet, dass** im Bereich des unteren Rands des Moskitonetzes (5) wenigstens eine Schlaufe als Reißorgan vorgesehen ist.
